# EUROPEAN PATENT APPLICATION

(11) **EP 2 254 191 A1**
(43) Date of publication of application: **24.11.2010**
(21) Application number: 09160577.4
(22) Date of filing: 19.05.2009
(51) Int. Cl.: H01M 10/46

(54) **Solar Charging Game Console Case**

(71) Applicant: Impact International Ltd, Exeter Devon EX1 3RU (GB)
(72) Inventor:

(57) **Abstract**

There is no other **solar charging case** available specifically made for the Nintendo DS range of hand held video games

The unique solar panel is built into the case.

The hand held game consoles are slotted into the case and charging starts immediately.

No other case is available to charge the Nintendo range of hand held video games in this way.

## Description

Solar charging game console cases for Nintendo DSL and DS hand held video game consoles.

Hand held video games are designed to be used on the move, but rarely have adequate battery power.

This application supports:
1. hard (EVA) case
2. 'Flip and Play' style case (for Nintendo DS and DSL consoles)

Both cases have a unique integral solar panel which allows for the handheld game console to be slotted into the cases and charged whilst on the move.

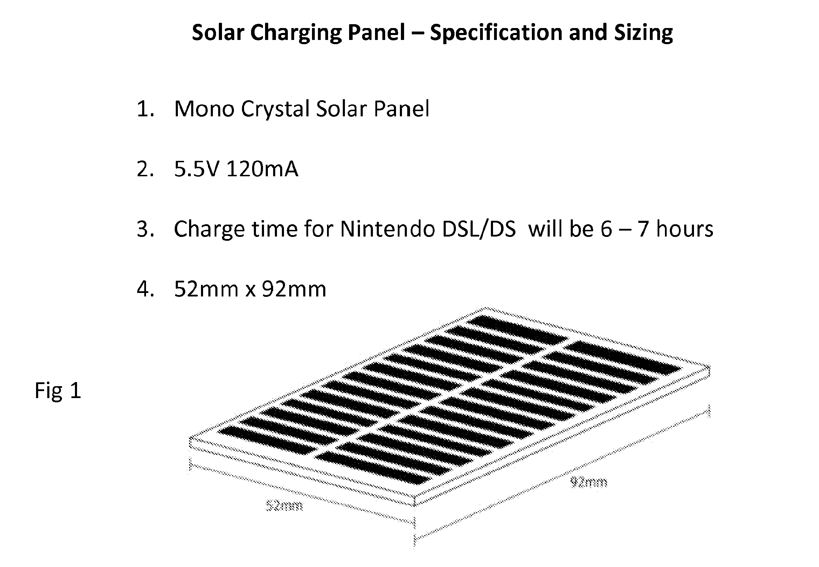

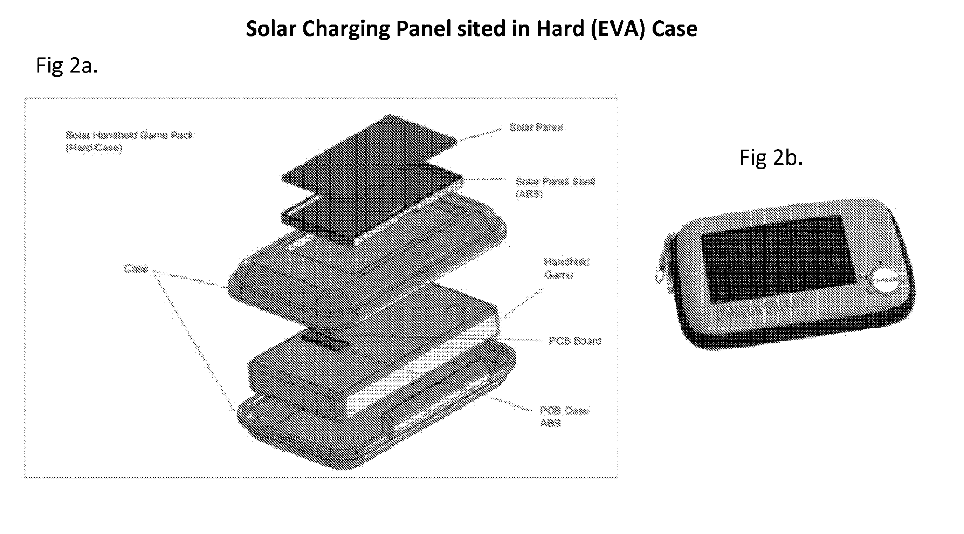

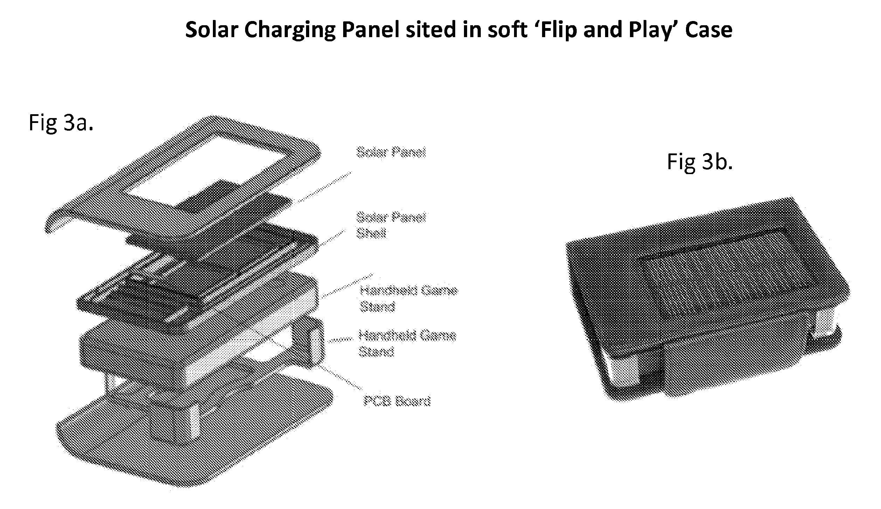

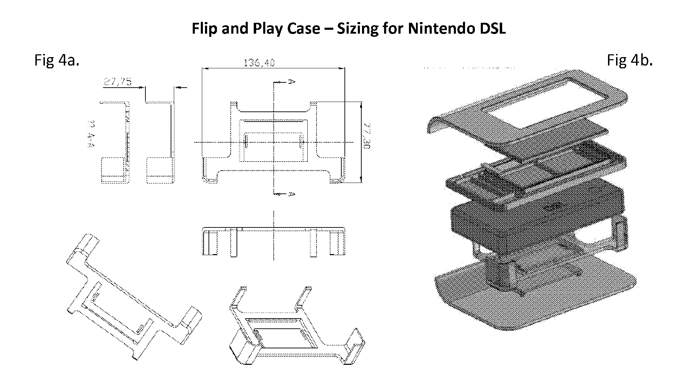

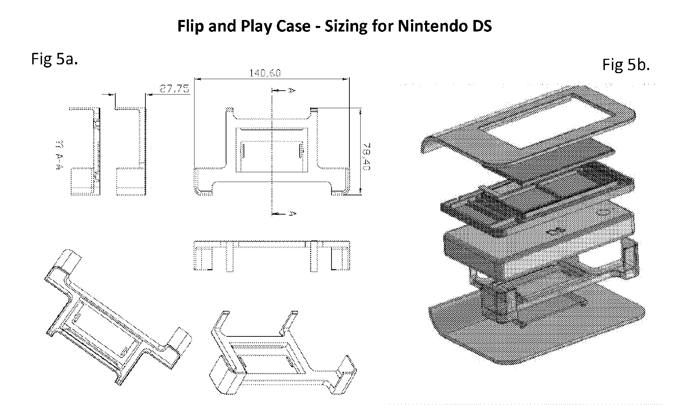

## Claims

**1.** The world's first solar charging cases made specifically for Nintendo DS and DSL hand held video game consoles.

**2.** Unique integral solar panel

**3.** Both hard and soft case versions of the case to be produced
